# EUROPÄISCHE PATENTANMELDUNG

(11) **EP 1 083 715 A2**
(43) Veröffentlichungstag der Anmeldung: **14.03.2001**
(21) Anmeldenummer: 00118334.2
(22) Anmeldetag: 24.08.2000
(51) Int. Cl.: H04L 25/24

(54) **Vorrichtung zum Regenerieren optischer Signale variabler Bitrate**

(30) Priorität: 10.09.1999 DE 19943337
(71) Anmelder: ALCATEL, 75008 Paris (FR)
(72) Erfinder: Turban, Karl-Albert, 71229 Leonberg-Höfingen (DE); Wolf, Michael, 74395 Mundelsheim (DE)
(74) Vertreter: KOHLER SCHMID + PARTNER

(57) **Zusammenfassung**

Eine Vorrichtung zum Regenerieren von Signalen (z.B. auf optischem Wege übertragenen Daten, wobei die optischen Daten in elektrische Signale umgewandelt, dann regeneriert und schließlich wieder in optische Signale umgewandelt werden), mit einer Anordnung zum Rückgewinnen des Taktsignals zwecks Regenerierung der Daten, ist dadurch gekennzeichnet, daß zwecks Regenerierung der Daten in einem breiten Frequenzbereich die Anordnung zur Rückgewinnung des Taktsignals derart ausgebildet ist, daß sie sich an die Bitrate der Signale automatisch anpaßt.

Dadurch eignet sich die Vorrichtung gut für die Regenerierung von bei verschiedenen Bitraten optisch übertragenen Daten.

## Beschreibung

Die Erfindung betrifft eine Vorrichtung zum Regenerieren von auf optischem Wege übertragenen Daten, wobei die optischen Daten in elektrische Signale umgewandelt, dann regeneriert und schließlich wieder in optische Signale umgewandelt werden, mit einer Anordnung zum Rückgewinnen des Taktsignals zwecks Regenerierung der Daten. Zukünftig ist zu erwarten, daß optische Datenübertragung mit nicht fest vorgegebenen, sondern bei verschiedenen Bitraten erfolgt. Regeneratoren, die zur Zeit eingesetzt werden und mit fester Bitrate arbeiten, sind für diesen Einsatzfall nicht mehr verwendbar. Es ist nun Aufgabe der Erfindung, eine Vorrichtung der eingangs genannten Art zu schaffen, die diesen Nachteil vermeidet. Gemäß dem kennzeichnenden Teil des Anspruchs 1 wird diese Aufgabe dadurch gelöst, daß die Anordnung zur Rückgewinnung des Taktsignals derart ausgebildet ist, daß sie sich an die Bitrate des eintreffenden optischen Signals automatisch anpaßt.

Da tatsächlich elektrische Signale regeneriert werden, erfaßt die Erfindung auch Anordnungen, bei denen keinerlei optische Signale auftreten.

Wesentliche Merkmale der Erfindung liegen in der Anordnung zum Rückgewinnen des Taktsignals. Daher wird für eine derartige Anordnung ebenfalls Schutz beansprucht.

Weitere Merkmale und Vorteile der Erfindung ergeben sich aus der nachfolgenden Beschreibung von Ausführungsbeispielen der Erfindung und anhand der Zeichnung, die für die Erfindung wesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:
- Figur 1: ein Blockschaltbild einer Regeneratoranordnung mit einer PLL, die bei allen auftretenden Frequenzen arbeitsfähig ist,
- Figur 2: ein Blockdiagramm einer Regeneratoranordnung mit parallelen PLLs,
- Figur 3: eine Modifizierung der Anordnung nach Figur 2, bei der eine der dargestellten PLLs gemäß der Anordnung nach Figur 1 ausgebildet ist und auf verschiedenen Frequenzen rasten kann.

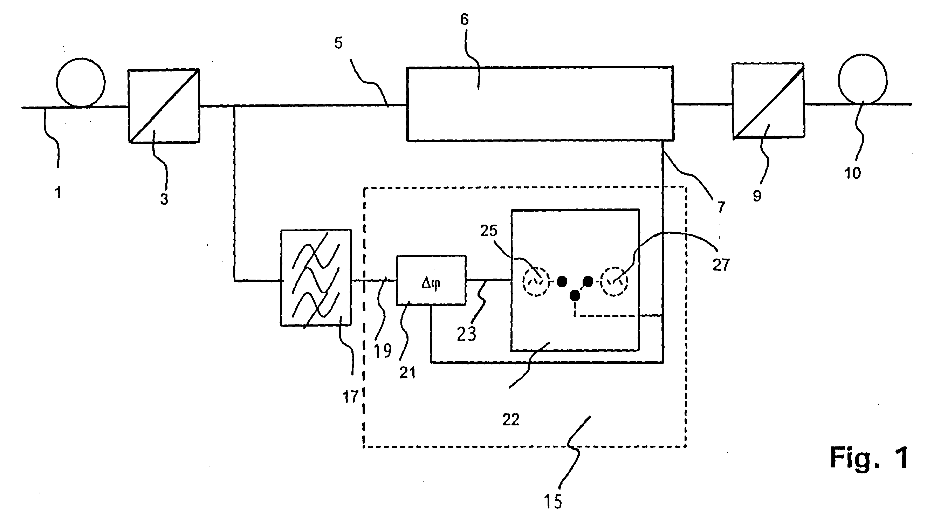

Bei der Anordnung nach Figur 1 wird ein auf einem optischen Kanal 1, versehen mit einem Lichtleitersymbol, eintreffendes optisches Signal in einem opto-elektrischen-Wandler 3 (O/E-Wandler 3) in ein äquivalentes elektrisches Signal umgewandelt. Das elektrische Signal wird einem Eingang 5 einer elektrischen Regeneratorschaltung 6 zugeführt, dort unter Verwendung eines aus dem elektrischen Signal zurückgewonnenen Taktsignals, das einem Eingang 7 der Regeneratorschaltung zugeführt wird, regeneriert, wie an sich bekannt, und das die Regeneratorschaltung verlassende elektrische Signal wird über einen elektrooptischen-Wandler 9 auf einen optischen Ausgangskanal 10 gegeben, ebenfalls wieder mit einem Lichtleitersymbol markiert.

Die Anordnung nach Figur 1 kann nur deshalb selbsttätig bei unterschiedlichen Taktfrequenzen des zu regenerierenden Signals arbeiten, weil das den optoelektrischen-Wandler 3 verlassende Signal auch einer bei allen auftretenden Frequenzen arbeitsfähigen Schaltungsanordnung zur Wiedergewinnung des Taktes zugeführt wird. Diese zuletzt genannte Schaltungsanordnung weist im Beispiel eine einzige PLL (phasenstarre Schleife, phase locked loop) 15 auf, der ein Bandfilter 17 vorgeschaltet ist, so daß dem Eingang 19 der phasenstarren Schleife aus dem am Ausgang des Wandlers 3 anstehenden elektrischen Signal ein gefilterter Bereich zugeführt wird. Die phasenstarre Schleife weist in bekannter Weise einen Phasendiskriminator 21 und einen spannungsgesteuerten Oszillator (VCO) 22 auf. Während übliche phasenstarre Schleifen mit einem einzigen Lokaloszillator arbeiten, ist zur Erweiterung des Frequenzbereiches im Beispiel eine Mehrzahl von Lokaloszillatoren 25, 27, und zwar im Beispiel zwei solche Lokaloszillatoren, vorgesehen. Aus dem Verhalten des Filters 17 und des Phasendiskriminators 21 zusammen mit dem Verhalten des spannungsgesteuerten Oszillators 22 ergeben sich Fang- und Haltebereiche für die PLL. Ist das Filter 17 elektronisch abstimmbar, so können der Fang- und Haltebereich dem Eingangssignal automatisch angepasst werden. Ist das Filter 17 fest eingestellt und besitzt mehrere Durchlassbereiche, so besitzt die PLL mehre Fang- und Haltebereiche gleichzeitig. Der Oszillator des VCO muß mit hoher Frequenzkonstanz arbeiten. Sollte es nicht möglich sein, bei der geforderten Frequenzkonstanz mit einem Oszillator den gesamten Frequenzbereich abzudecken, so kann man auch mehrere Oszillatoren 25, 27, zwischen denen dann umgeschaltet werden muß, verwenden. Die Frequenzen der Oszillatoren 25, 27, die mit hoher Konstanz zur Verfügung stehen, können durch das Signal 23 am VCO 22 Eingang in bekannter Weise innerhalb eines durch die jeweils verwendete Technik beschränkten Bereiches durchgestimmt werden. Der VCO 22 ist breitbandig. Eine Schaltlogik im VCO 22 sorgt dafür, daß der VCO 22 unter den mehreren Oszillatorfrequenzen (im Beispiel nur 2) das passende Oszillatorsignal auswählt. Das Ausgangssignal des Phasendiskriminators 21 wird vom VCO überwacht und zur Auswahl des geeigneten Oszillators verwendet.

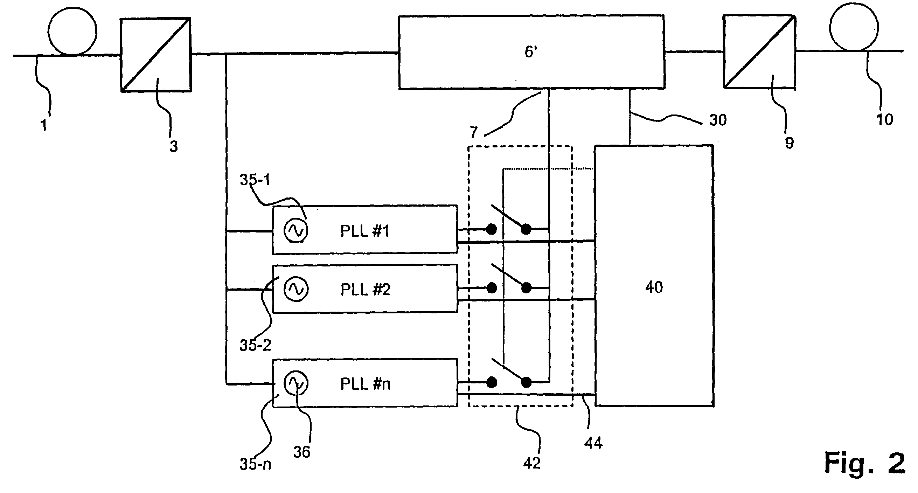

Bei der in Figur 2 gezeigten Anordnung sind mehrere PLLs in Parallelschaltung vorgesehen. Soweit Teile mit der Figur 1 übereinstimmen, sind diese mit gleichen Bezugszeichen versehen. Die elektrische Regeneratorschaltung 6 der Figur 1 trägt hier das Bezugszeichen 6', weil diese Schaltung bei der Anordnung nach Figur 2 im Gegensatz zur Figur 1 einen zur Steuerung der Taktrückgewinnung genutzten Steuerungs-Eingang/Ausgang 30 aufweist. Das Signal 30 kann dazu benutzt werden, um im Falle der Umschaltung / Neusynchronisation der PLL den Ausgang der Regeneratorschaltung zu disablen (temporär zu deaktivieren) oder ein AIS (alarm indication signal) Signal zu erzeugen.

Bei der Anordnung nach Figur 2 ist eine Mehrzahl von PLLs 35-1, 35-2,..., bis 35-n vorgesehen, die entsprechend auch mit PLL #1, bis PLL #n bezeichnet sind. Um zu symbolisieren, daß jeder dieser PLLs jeweils nur ein Oszillator mit festem Fang und Haltebereich starr zugeordnet ist, sind diese Oszillatoren 36, die jeweils für unterschiedliche Frequenzen ausgebildet sind, in den die jeweilige PLL symbolisierenden Block hineingezeichnet.

Zur Zeichnungsvereinfachung sind die Bandfilter oder sonstigen Filteranordnungen, die zweckmäßigerweise jeder PLL vorgeschaltet werden, in Figur 2 nicht dargestellt, im Gegensatz zu Figur 1, wo das Bandfilter 17 gezeigt ist.

In Abhängigkeit von der Taktfrequenz des jeweiligen, den Wandler 3 verlassenden elektrischen Signals, wird durch einen Controller 40, der mit dem Steuerausgang 30 der Regeneratorschaltung 6' in Verbindung steht, jeweils die passende PLL unter den PLLs 35-1 bis 35-n ausgewählt und der Ausgang dieser ausgewählten PLL durch eine entsprechende Schaltereinrichtung 42 mit dem Takteingang 7 der Regeneratorschaltung 6' verbunden. Um die richtige Auswahl zu treffen, erfaßt der Controller 40 über entsprechende Verbindungsleitungen 44 das von den einzelnen PLLs 35 gelieferte Diskriminatorsignal, Ist eines der Diskriminatorsignale stabil, so wird diese PLL ausgewählt. Die Hattebereiche der parallel betriebenen PLLs sollten sich in diesem Fall nicht überlappen. Gibt es überlappende Haltebereiche, so können mehrere stabile Diskriminatorsignale gleichzeitig auftreten, es obliegt dann dem Controller eine beliebige dieser stabilen PLLs auszuwählen und auf die Regenerationsschaltung 6 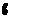 aufzuschalten. Die Anordnung der Figur 2 gestattet, das optische Signal des Kanals 1 auf eine Anzahl von n unterschiedlichen Taktfrequenzen zu regenerieren.

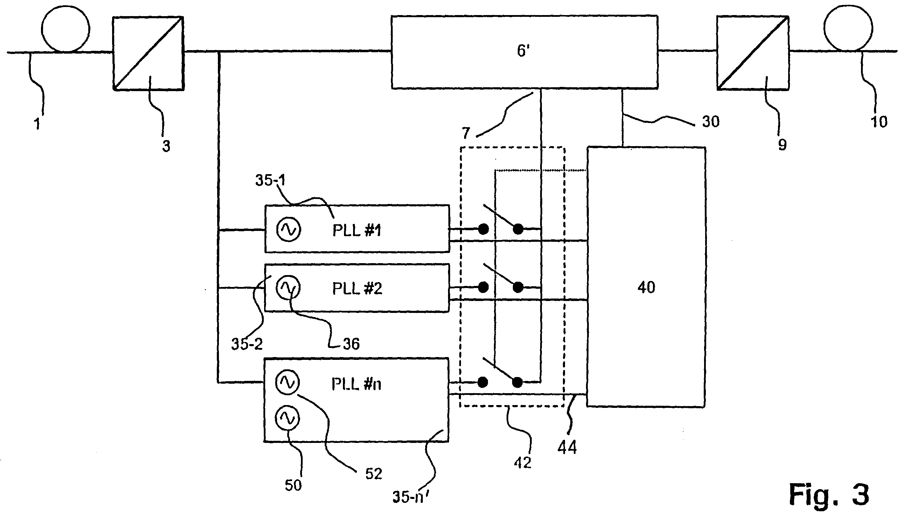

Figur 3 zeigt eine Anwendung, bei der die in Figur 1 und 2 gezeigten Schaltungsanordnungen miteinander kombiniert sind. Die Anordnung nach Figur 3 stimmt im wesentlichen mit der Anordnung der Figur 2 überein, mit der einzigen Ausnahme, daß im Beispiel eine einzige PLL, nämlich die der PLL 35-n der Figur 2 entsprechende PLL 35-n' in der Weise ausgebildet ist, wie dies bei Figur 1 der Fall ist. In diesem Fall befinden sich in PLL 35-n 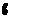 zwei Oszillatoren 50 und 52 für unterschiedliche Frequenzbereiche. Prinzipiell könnten auch alle PLLs jeweils mehrere Oszillatoren enthalten.

Die Anordnung nach Figur 3 kann z.B. vorteilhaft sein, wenn die Anzahl der Steuerleitungen 41 des Controllers 40 beschränkt ist und beispielsweise die Anordnung nach Figur 2 so umgerüstet werden soll, daß der Frequenzbereich über den durch die PLL 35-n vorgegebenen Bereich hinaus vergrößert werden muß. Wenn der Controller 40 hierfür noch weitere noch nicht benutzte Steuerleitungen 41 aufweist, wird einfach eine weitere PLL mit einem einzigen, möglicherweise breitbandigeren VCO hinzugefügt. Anderenfalls wird in diesem genannten Beispiel die PLL 35-n aus der Schaltungsanordnung entfernt und durch die PLL 35-n' ersetzt, so daß sich hierdurch die Anordnung nach Figur 3 ergibt.

Anstatt des Bandfilters am Eingang der PLL (17 in Figur 1) kann ein durchstimmbares Filter bei Ausführungsformen der Erfindung verwirklicht sein. Anstatt einer endlichen Anzahl von Oszillatoren kann ein einziger über den gesamten interessierenden Frequenzbereich durchstimmbarer Oszillator verwendet sein. Unter Berücksichtigung von Stabilität und Kosten des Oszillators dürfte heute eine Anordnung mit mehreren Oszillatoren, wie bei den Ausführungsformen der Figuren 1 bis 3, besonders günstig sein.

Die Erfindung eignet sich insbesondere dann, wenn für die Übertragung neben SDH-Signalen auch das neu standardisierte Verfahren des 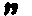 digital wrappers" (DW) für die optische Übertragungstechnik eingesetzt wird.

Der Fangbereich und Haltebereich der PLL ist durch die Schnelligkeit und Genauigkeit des Oszillators und des Phasendiskriminators gegeben. Besonders interessant wird die Erfindung dann, wenn es für einen Netzbetreiber erforderlich ist, Daten auf optischen Kanälen mit unterschiedlichen Taktfrequenzen, die dem Netzbetreiber möglicherweise sogar für den Einzelfall nicht bekannt sind, durchzuleiten. Die Bitrate bei derartigen Übertragungen ist somit nicht fest definiert. Für einen derartigen Zweck sind Regeneratoren, die mit einer festen Taktfrequenz arbeiten, nicht einsetzbar. Eine gegenüber einer möglicherweise vorgesehenen Normtaktrate höhere Rate kann sich insbesondere beispielsweise dann ergeben, wenn ein Signal in Blöcken übertragen wird und zwecks Fehlererkennung jedem Block eine FEC (forward error correction)-Information, die empfangsseitig eine Fehlererkennung und Fehlerkorrektur ermöglicht, beigefügt wird. Da durch diese FEC die Anzahl der zu übertragenden Bits zunimmt, muß die Taktfrequenz bei der Übertragung entsprechend vergrößert werden. Derartigen Anforderungen kann die Erfindung genügen.

## Patentansprüche

1. Vorrichtung zum Regenerieren von Signalen (z.B. auf optischem Wege übertragenen Daten, wobei die optischen Daten in elektrische Signale umgewandelt, dann regeneriert und schließlich wieder in optische Signale umgewandelt werden), mit einer Anordnung zum Rückgewinnen des Taktsignals zwecks Regenerierung der Daten, dadurch gekennzeichnet, daß zwecks Regenerierung der Daten in einem breiten Frequenzbereich die Anordnung zur Rückgewinnung des Taktsignals derart ausgebildet ist, daß sie sich an die Bitrate der Signale automatisch anpaßt.

2. Vorrichtung nach Anspruch 1, dadurch gekennzeichnet, daß die Anordnung mindestens eine phasenstarre Schleife (PLL) (15; 35) und eine Mehrzahl von lokalen Oszillatoren (25, 27; 36, 50, 52) aufweist, und daß eine Steueranordnung vorgesehen ist, die in Abhängigkeit von der Bitrate des optischen Signals einen geeigneten lokalen Oszillator und gegebenenfalls eine geeignete phasenstarre Schleife auswählt.

3. Vorrichtung nach Anspruch 2, dadurch gekennzeichnet, daß mehrere phasenstarre Schleifen (PLL) (35) mit jeweils einer vorbestimmten Arbeitsfrequenz vorgesehen sind, und daß eine Steuereinrichtung die zum Einrasten auf die Bitrate des eintreffenden optischen Signals am besten geeignete phasenstarre Schleife auswählt und wirksam schaltet.

4. Vorrichtung nach Anspruch 2, dadurch gekennzeichnet, daß eine phasenstarre Schleife (15; 35-n 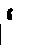 ) mit mehreren Oszillatoren (25, 27; 50, 52) zur Anpassung der Arbeitsfrequenz der phasenstarren Schleife auf die augenblickliche Bitrate der eintreffenden optischen Signale vorgesehen ist.

5. Vorrichtung nach Anspruch 2, dadurch gekennzeichnet, daß mehrere phasenstarre Schleifen vorgesehen sind, die mindestens eine phasenstarre Schleife (35-1, 35-2) mit einem einzigen Oszillator (36) und mindestens eine phasenstarre Schleife (35-n 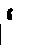 ) mit mehreren Oszillatoren (50, 52) umfassen.

6. Anordnung zum Rückgewinnen des Taktsignals von zu regenerierenden Signalen, gekennzeichnet durch Merkmale eines der Ansprüche 1 bis 5.
